# EUROPÄISCHE PATENTSCHRIFT

(11) **EP 0 834 645 B1**
(45) Veröffentlichungstag und Bekanntmachung des Hinweises auf die Patenterteilung: **18.04.2001**
(21) Anmeldenummer: 97810656.5
(22) Anmeldetag: 15.09.1997
(51) Int. Cl.: F01D 5/02, F01D 5/04, F02C 6/12

(54) **Verdichterradbefestigung für Turbolader**
Compressor wheel mounting for a turbocharger
Fixation d'une roue de compresseur pour une turbo-soufflante

(30) Priorität: 02.10.1996 DE 19640647
(43) Veröffentlichungstag der Anmeldung: 08.04.1998
(73) Patentinhaber: ABB Turbo Systems AG, 5401 Baden (CH)
(72) Erfinder: Greber, Jürg, 5430 Wettingen (CH)
(74) Vertreter: ABB Patent Attorneys

(56) Entgegenhaltungen:
- EP-A- 0 395 826
- WO-A-93/02278
- DE-A- 4 444 082
- US-A- 2 441 432
- US-A- 5 209 595

## Beschreibung

### Technisches Gebiet

Die Erfindung betrifft eine Verdichterradanordnung für Turbolader, insbesondere für Abgasturbolader, einschliesslich Montage-/Demontagevorrichtung und -verfahren.

### Stand der Technik

Abgasturbolader bestehen hauptsächlich aus einem Gehäuse mit integrierter Abgasturbine und einem entsprechenden Verdichter, wobei letztere zumeist auf einer gemeinsamen Welle angeordnet sind. Wesentliche Funktionsvoraussetzung der Abgasturbolader ist eine drehfeste Wellen-Naben-Verbindung sowohl auf der Turbinen- als auch auf der Verdichterseite. Eine solche Verbindung lässt sich entweder kraft- oder auch formschlüssig realisieren.

Kraftschlüssige Verbindungen können beispielsweise durch Aufpressen oder Aufschrumpfen der Nabe auf die Welle hergestellt werden. Ein solcher Vorgang ist jedoch relativ arbeitsaufwendig. Um sowohl bei der Reparatur als auch bei der Wartung der Turbolader an entsprechender Stelle in deren Inneres eingreifen zu können, müssen diese weitgehend demontiert und dabei häufig auch die Wellen-Naben-Verbindungen gelöst werden. Dadurch wird jedoch der erforderliche Arbeitsaufwand für Wartungs- bzw. Reparaturarbeiten deutlich erhöht. Es ist daher mit einem wesentlich längeren Stillstand, d.h. Leistungsausfall, der mit dem Turbolader verbundenen Brennkraftmaschine zu rechnen.

Eine formschlüssige Wellen-Naben-Verbindung für das Verdichterrad eines Turboladers ist aus dem US 5,193,989 bekannt. Dazu weist das Verdichterrad turbinenseitig eine Befestigungsmuffe mit einer Sackbohrung und integriertem Innengewinde auf, welches mit dem Gewindeende der Turboladerwelle verschraubt wird. Beidseitig des Innengewindes ist jeweils eine Führungsfläche ausgebildet, die mit einer entsprechenden Führungsfläche des Gewindeendes korrespondieren.
Eine ähnliche Wellen-Naben-Verbindung mit einer in einer rotationssymetrisch ausgebildeten Verdichterradrückwandverlängerung eingebrachten Sackborung mit einem Innengewinde zur Aufnahme eines auf einer Welle aufgebrachten Gewindes ist in DE 44 44 082 dargestellt.
Bei diesen Lösungen wird die Zone der grössten Spannungskonzentration, welche sich bei jedem Verdichterrad im Bereich seiner grössten radialen Ausdehnung befindet, nicht durch eine der Befestigung dienende Bohrung geschwächt. Weil die Wellen-Naben-Verbindung somit ausserhalb der gefährdeten Zone angeordnet ist, wird eine besonders stabile Befestigung des Verdichterrades erreicht.
Diese vorteilhafte Befestigungen des Verdichterrades haben jedoch Nachteile bei der Montage bzw. der Demontage zur Folge. Da bei einem mit einer Brennkraftmaschine verbundenen Turbolader kein Zugriff auf die Turbinenseite möglich ist, kann das erforderliche Gegendrehmoment zum Lösen bzw. Befestigen des Verdichterrades nicht aufgebracht werden. Demzufolge können die Turbolader-Komponenten von der Verdichterseite weder montiert noch demontiert werden. Zur Wartung bzw. Reparatur des Turboladers muss dieser somit, einschliesslich der angebauten Gasleitungen, von der Brennkraftmaschine gelöst werden. Ein solches Vorgehen ist jedoch sehr arbeitsaufwendig und führt deshalb zu einem längeren Leistungsausfall der mit dem Turbolader verbundenen Brennkraftmaschine.
Demgegenüber sind eine Reihe von Verdichterradanordnungen für Turbolader bekannt, beispielsweise aus DE 43 30 380 oder EP 395 826, bei denen das Verdichterrad eine Nabe mit durchgehender Bohrung aufweist. Zur axialen Verspannung des Verdichterrads besitzt die durch die Bohrung reichende Turboladerwelle ein Gewindeende, welches entweder mit einem in der Bohrung ausgebildeten Innengewinde korrespondiert oder auf dem eine Mutter geführt wird. Bei diesen Lösungen ist die Wellen-Naben-Verbindung jedoch in der Zone der grössten Spannungskonzentration ausgebildet. Insbesondere bei hohen Drehzahlen des Turboladers kann es zur Aufweitung der Nabenbohrung und damit zum Lösen der Wellen-Naben-Verbindung kommen. Demnach ist eine sichere Befestigung des Verdichterrades nicht dauerhaft gewährleistet.

In EP 395 826 ist ausserdem ein Verfahren zur Montage eines Turboladers mittels einer Montagevorrichtung beschrieben. Dabei wird ein Turboladergehäuse turbinenseitig auf die plattenförmig ausgebildete und eine Aufnahmevorrichtung zum Fixieren der Turboladerwelle enthaltende Montagevorrichtung gelegt und anschliessend von oben die Turboladerwelle, ein Turbinenrad, sowie ein Verdichterrad in einem zweiteiligen Verdichtergehäuse hinzugefügt und verschraubt. Dieses Montageverfahren kann nur auf einen nicht mit einer Brennkraftmaschine verbundenen Turbolader angewendet werden und hat insbesondere für Wartung bzw. Reparatur des Turboladers den Nachteil, dass dieser von der Brennkraftmaschine gelöst sein muss.

### Darstellung der Erfindung

Die Erfindung versucht alle diese Nachteile zu vermeiden. Ihr liegt die Aufgabe zugrunde, eine Verdichterradanordnung für Turbolader zu schaffen, deren Verdichterradbefestigung besonders stabil und dennoch leicht lösbar ausgebildet ist. Dazu sollen ein vereinfachtes Montage-/Demontageverfahren und eine entsprechende Vorrichtung angegeben werden.
Erfindungsgemäss wird dies dadurch erreicht, dass bei einer Vorrichtung gemäss dem Oberbegriff des Anspruchs 1, die Nabe eine turbinenseitige Befestigungsmuffe mit integriertem Innengewinde aufweist. Das Innengewinde korrespondiert mit dem Befestigungsgewinde des verdichterradseitigen Wellenendes. Jeweils beidseitig des Innengewindes und des Befestigungsgewindes ist eine Führungsfläche ausgebildet. Die Führungsflächen der Befestigungsmuffe korrespondieren mit den Führungsflächen des Wellenendes. Das Verdichtergehäuse besteht aus zumindest einem lufteintritt- sowie zumindest einem luftaustrittseitigen Gehäuseteil. Zwischen beiden Gehäuseteilen sind mehrere Befestigungselemente lösbar angeordnet. Am verdichterradseitigen Wellenende ist eine erste, am Verdichterrad eine zweite und am luftaustrittseitigen Gehäuseteil eine dritte Aufnahmeeinrichtung für eine Vorrichtung zur Montage-/Demontage des Verdichterrades angeordnet.
Mit dieser Verdichterradanordnung wird eine stabile, weil ausserhalb der Zone der grössten Spannungskonzentration angeordnete, und von der Verdichterseite lösbare Wellen-Naben-Verbindung geschaffen. Dabei übernehmen das Innengewinde der Befestigungsmuffe und das Befestigungsgewinde des Wellenendes die Haltefunktion des Verdichterrades auf der Welle und die einander entsprechenden Führungsflächen sorgen für die erforderderliche Konzentrizität von Welle und Verdichterrad. Aufgrund der Ausbildung der miteinander korrespondierenden Führungsflächen ist die Reproduzierbarkeit der Restunwuchtwerte auch bei einem solchen Verdichterrad mit durchgehender Bohrung gewährleistet. Dadurch kann die zum Auswechseln des Verdichterrades benötigte Arbeitszeit verkürzt und somit die erforderliche Stillstandzeit des Turboladers verringert werden.

Besonders vorteilhaft ist es, wenn die erste Aufnahmeeinrichtung als ein am Wellenende angeordneter Aussensechskant, die zweite Aufnahmeeinrichtung als ein am der Befestigungsmuffe entgegengesetzten Ende der Nabe angeordneter Sechskant und die dritte Aufnahmeeinrichtung als mehrere Gewindebohrungen im luftaustrittseitigen Gehäuseteil ausgebildet sind. Dadurch wird die Lösbarkeit des Verdichterrades von der Verdichterseite mit relativ einfachen Mitteln realisiert.

Zum Austausch des Verdichterrades ist eine aus einer Montageplatte, der Arretiervorrichtung und der Drehvorrichtung bestehende Montage-/Demontagevorrichtung vorgesehen. Die Montageplatte weist dazu in ihrem radial äusseren Bereich mehrere Befestigungsbohrungen für den luftaustrittseitigen Gehäuseteil des Verdichters sowie eine zentrale Ausnehmung zur Aufnahme der Arretier- und der Drehvorrichtung auf. In der zentralen Ausnehmung ist eine Büchse zur Aufnahme der Arretiervorrichtung in der Montageplatte befestigt.

Bei der Demontage des Verdichterrades werden zunächst die den luftaustrittseitigen mit dem lufteintrittseitigen Gehäuseteil verbindenden Befestigungselemente gelöst und der lufteintrittseitige Gehäuseteil entfernt. Danach wird die Montageplatte am luftaustrittseitigen Gehäuseteil befestigt. Anschliessend wird das Verdichterrad mittels der Arretiervorrichtung gegen Verdrehen um seine Achse gesichert. Danach erfolgt mittels der Drehvorrichtung das Lösen der Wellen-Naben-Verbindung. Anschliessend wird die Montageplatte vom luftaustrittseitigen Gehäuseteil getrennt und dabei sowohl die Arretiervorrichtung als auch die Drehvorrichtung vom Verdichterrad abgezogen. Als letzter Schritt der Demontage wird das Verdichterrad entfernt. Je nach Erfordernis kann dann entweder ein neues Verdichterrad eingesetzt werden, wobei dessen Montage in umgekehrter Reihenfolge der Demontage-Verfahrensschritte erfolgt, oder der Turbolader von der Verdichterseite aus weiter demontiert werden.

Der wesentliche Vorteil dieser Lösung liegt darin begründet, dass, trotz verbesserter Wellen-Naben-Verbindung, zur Montage/Demontage des Verdichterrades die Verbindung der Brennkraftmaschine mit dem Turbolader nicht gelöst werden muss. Dadurch wird die Wartung bzw. Reparatur des Turboladers wesentlich vereinfacht und die mit ihm verbundene Brennkraftmaschine erreicht eine deutlich verbesserte Verfügbarkeit.

Natürlich sind nach erfolgter Demontage des Verdichterrades auch die weiter innen angeordneten Bauteile des Turboladers, wie z.B. die Wellenlager zugänglich. Sie können demnach ebenfalls überprüft und/oder ausgebaut werden, ohne dazu den Turbolader von der Brennkraftmaschine lösen zu müssen.

Es ist besonders zweckmässig, wenn das Wellenende im Bereich der Befestigungsmuffe angeordnet ist. Weil bei dieser Lösung die gesamte Wellen-Naben-Verbindung ausserhalb der Zone mit der grössten Spannungskonzentration liegt, wird eine sehr sichere und beständige Befestigung des Verdichterrades erreicht.

Alternativ dazu ist das Wellenende am der Befestigungsmuffe entgegengesetzten Bereich der Nabe angeordnet. Dadurch kann die zum Lösen bzw. Befestigen des Verdichterrades dienende Drehvorrichtung wesentlich kürzer ausgebildet werden, was zu einer Vereinfachung der Montage bzw. der Demontage des Verdichterrades führt.

Ferner ist es vorteilhaft, wenn das Wellenende zwischen dem Bereich der Befestigungsmuffe und dem der Befestigungsmuffe entgegengesetzten Bereich der Nabe angeordnet ist. Diese Ausbildung verbindet die Vorteile der o.g. Lösungen miteinander und verringert deren jeweilige Nachteile.

Schliesslich ist die Drehvorrichtung auf ihrer der Nabe abgewandten Seite vorteilhaft mit einem Übersetzungsgetriebe verbunden und an der Montageplatte eine Hebe- und Transportvorrichtung befestigt. Damit wird die Montage/Demontage grösserer Turbolader wesentlich erleichtert.

### Kurze Beschreibung der Zeichnung

In der Zeichnung ist ein Ausführungsbeispiel der Erfindung anhand eines Abgasturboladers mit Innenlagerung dargestellt. Es zeigen:
- Fig. 1: einen Längsschnitt des Abgasturboladers;
- Fig. 2: eine vergrösserte Darstellung von Fig. 1, im Bereich der Wellen-Naben-Verbindung des Verdichterrades;
- Fig. 3: eine Darstellung der Verbindung von Verdichterrad und Montage-/Demontagevorrichtung, wobei das Verdichterrad oben im montierten und unten im von der Turboladerwelle gelösten Zustand gezeigt ist;
- Fig. 4: einen vergrösserten Ausschnitt von Fig. 3, im Bereich der Verbindung von Verdichterrad und Montage-/Demontagevorrichtung.

Es sind nur die für das Verständnis der Erfindung wesentlichen Elemente gezeigt. Nicht dargestellt sind von der Anlage beispielsweise die mit dem Abgasturbolader verbundene Brennkraftmaschine und die entsprechenden Verbindungsleitungen. Die Strömungsrichtung der Arbeitsmittel ist mit Pfeilen bezeichnet.

### Weg zur Ausführung der Erfindung

Der Abgasturbolader besteht aus einem Verdichter 1 und einer Abgasturbine 2. Turbinenseitig 2 ist ein Gehäuse 3 angeordnet, welches von einem Gaseintritt- und einem Gasaustrittgehäuse 4, 5 gebildet wird. Im Turbinenghäuse 3 ist ein von einer Turboladerwelle 6 getragenes Turbinenrad 7 mit Laufschaufeln 8 drehbar gelagert. Stromauf der Laufschaufeln 8 ist ein Düsenring 9 angeordnet. Das Gaseintrittgehäuse 4 weist einen Strömungskanal 10 auf, welcher die Abgase einer nicht dargestellten, mit dem Abgasturbolader verbundenen sowie als Dieselmotor ausgebildeten Brennkraftmaschine aufnimmt und zum Turbinenrad 7 weiterleitet. Letzteres wird nach aussen von einem Turbinendiffusor 11 begrenzt, welcher seinerseits durch Schrauben 12 am Gasaustrittgehäuse 5 befestigt ist.

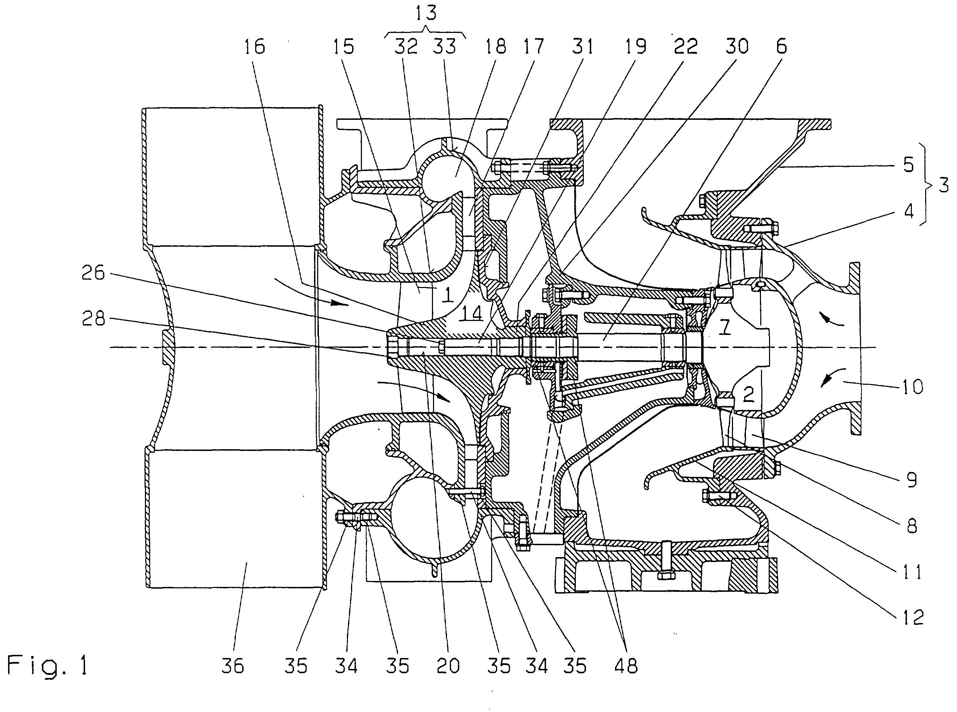

Der Verdichter 1 des Abgasturboladers ist als Radialverdichter ausgebildet. Er besteht aus einem Verdichtergehäuse 13, in dem ein Verdichterrad 14 drehbar auf der Turboladerwelle 6 gelagert ist. Das Verdichterrad 14 weist eine mit einer Vielzahl von Laufschaufeln 15 besetzte Nabe 16 auf. Stromab der Laufschaufeln 15 schliesst ein radial angeordneter, beschaufelter Diffusor 17 an, der seinerseits in eine Spirale 18 des Radialverdichters mündet (Fig. 1).

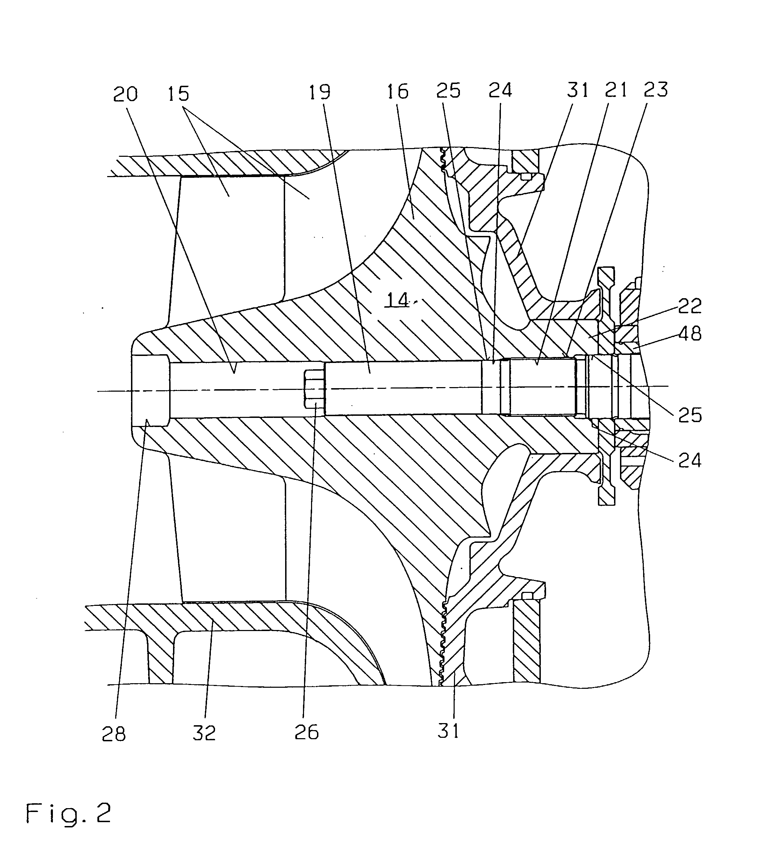

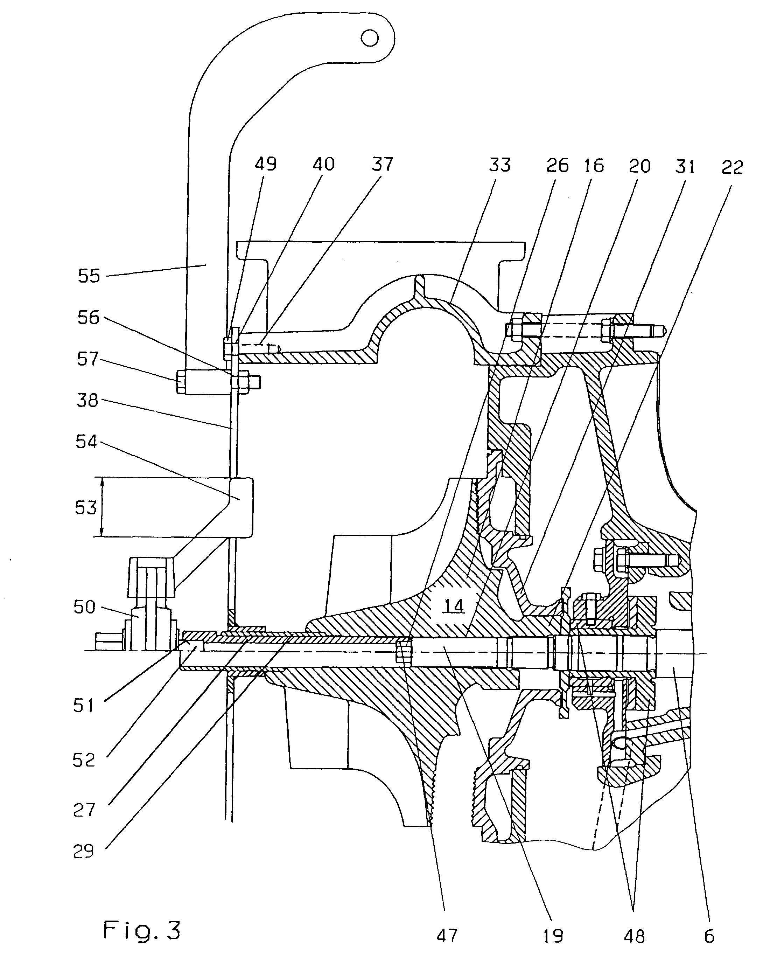

In der Nabe 16 ist eine zentrale, ein Wellenende 19 der Turboladerwelle 6 aufnehmende Durchgangsbohrung 20 ausgebildet. Auf dem Wellenende 19 ist ein Befestigungsgewinde 21 für die Nabe 16 angeordnet. Turbinenseitig weist die Nabe 16 eine Befestigungsmuffe 22 mit einem Innengewinde 23 auf. Das Wellenende 19 ist zwischen dem Bereich der Befestigungsmuffe 22 und dem der Befestigungsmuffe 22 entgegengesetzten Bereich der Nabe 16 angeordnet (Fig. 2). Natürlich kann das Wellenende 19 auch im Bereich der Befestigungsmuffe 22 oder am der Befestigungsmuffe 22 entgegengesetzten Bereich der Nabe 16 angeordnet sein (nicht dargestellt). Sein Befestigungsgewinde 21 ist mit dem Innengewinde 23 der Befestigungsmuffe 22 korrespondierend ausgebildet. Beidseitig des Innengewindes 23 und auch des Befestigungsgewindes 21 ist jeweils eine Führungsfläche 24, 25 ausgebildet, wobei die Führungsflächen 24 der Befestigungsmuffe 22 mit den Führungsflächen 25 des Wellenendes 19 korrespondieren. Am Wellenende 19 ist eine als Aussensechskant ausgebildete erste Aufnahmeeinrichtung 26 für eine Drehvorrichtung 27 und am Verdichterrad 14 eine zweite, als Innensechskant der Nabe 16 ausgebildete, Aufnahmeeinrichtung 28 für eine Arretiervorrichtung 29 angeordnet (Fig. 2, Fig. 3). Bei entsprechender Ausbildung der Bauteile kann natürlich auch die erste Aufnahmeeinrichtung 26 am Verdichterrad 14 und die zweite Aufnahmeeinrichtung 28 am Wellenende 19 angeordnet werden (ebenfalls nicht dargestellt).

Der Abgasturbolader besitzt eine Innenlagerung, d.h. zwischen dem Turbinengehäuse 3 und dem Verdichtergehäuse 13 ist ein Lagergehäuse 30 angeordnet, in welchem die Turboladerwelle 6 drehbar gelagert ist. Das Lagergehäuse 30 und das Verdichtergehäuse 13 sind mittels einer Zwischenwand 31 voneinander getrennt. Die Zwischenwand 31 nimmt die Befestigungsmuffe 22 der Nabe 16 des Verdichterrades 14 auf und ist gegenüber dieser abgedichtet. Das Verdichtergehäuse 13 besteht aus einem lufteintritt- sowie einem luftaustrittseitigen Gehäuseteil 32, 33. Beide Gehäuseteile 32, 33 sind mittels mehrerer als Schrauben ausgebildete Befestigungselemente 34 lösbar miteinander verbunden. Dazu sind entsprechende, als Bohrungen ausgebildete Ausnehmungen 35 in den Gehäuseteilen 32, 33 angeordnet. Der lufteintrittseitige Gehäuseteil 32 ist mit einem Filter-Schalldämpfer 36 verbunden (Fig. 1). Am luftaustrittseitigen Gehäuseteil 33 ist eine dritte, als Gewindebohrung ausgebildete Aufnahmeeinrichtung 37 für eine Montageplatte 38 angeordnet (Fig. 3). Natürlich können die im luftaustrittseitigen Gehäuseteil 33 angeordneten Bohrungen 35 auch als dritte Aufnahmeeinrichtung 37 ausgebildet werden. Damit sind diese Bohrungen 35 auf vorteilhafte Weise zweifach nutzbar und die Notwendigkeit einer separaten, dritten Aufnahmeeinrichtung 37 entfällt.

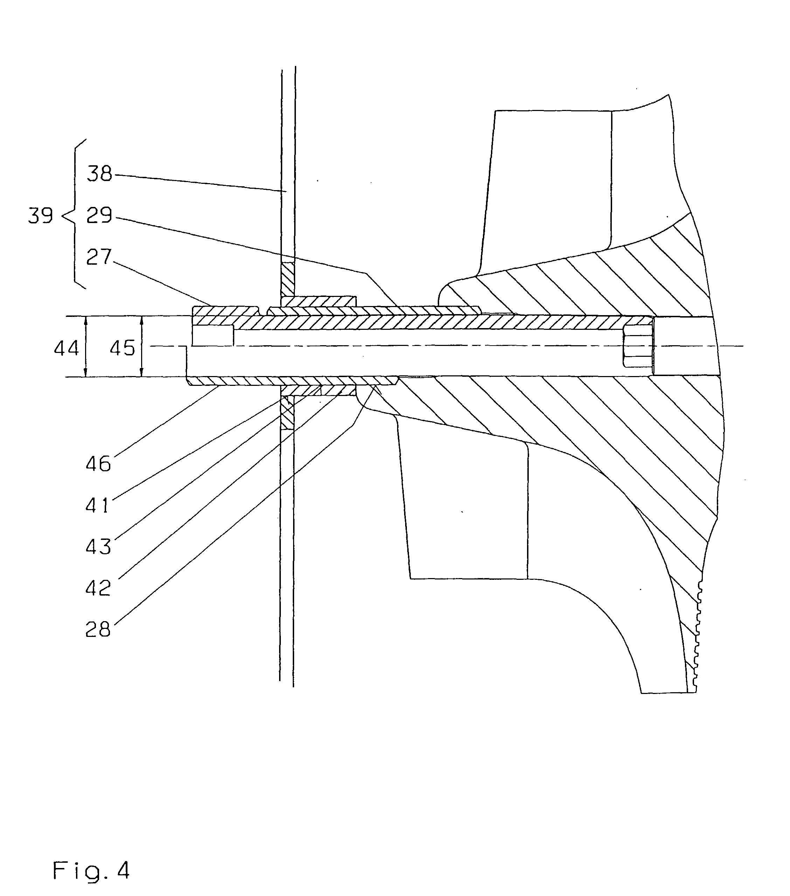

Die Drehvorrichtung 27, die Arretiervorrichtung 29 und die Montageplatte 38 bilden gemeinsam eine Montage-/Demontagevorrichtung 39 für das Verdichterrad 14 (Fig. 3, Fig. 4). Dabei ist die Arretiervorrichtung 29 als Arretierhülse und die Drehvorrichtung 27 als Steckschlüssel ausgebildet. Die Montageplatte 38 weist in ihrem radial äusseren Bereich mehrere Befestigungsbohrungen 40 auf, welche ihrer Verbindung mit dem luftaustrittseitigen Gehäuseteil 33 des Verdichterrades 14 dienen. Sie besitzt ausserdem eine zentrale Ausnehmung 41, in der eine Büchse 42 befestigt und mit einem Innensechskant 43 versehen ist. Die Arretierhülse 29 weist einen Innendurchmesser 44 und der Steckschlüssel 27 einen Aussendurchmesser 45 auf. Letzterer ist kleiner als der Innendurchmesser 44 der Arretierhülse 29 ausgebildet, so dass der Steckschlüssel 27 drehbar in der Arretierhülse 29 angeordnet werden kann. Die äussere Oberfläche der Arretierhülse 29 ist mit einem Aussensechskant 46 versehen, welcher mit dem Innensechskant 43 der Büchse 42 bzw. mit dem Innensechskant 28 der Nabe 16 des Verdichterrades 14 zusammenwirkt (Fig. 4). Der Aussendurchmesser 45 des Steckschlüssels 27 korrespondiert auf einem Teil seiner Länge mit der Durchgangsbohrung 20 der Nabe 16. Zudem weist der Steckschlüssel 27 an seiner dem Verdichterrad 14 zugewandten Seite einen Innensechskant 47 auf, welcher mit dem Aussensechskant 26 des Wellenendes 19 korrespondiert (Fig. 3).

Ist die Demontage des Verdichterrades erforderlich oder müssen weiter innen angeordnete Bauteile, wie z.B. die Lager 48 ausgetauscht werden, so wird zunächst der Filter-Schalldämpfer 36 vom Verdichtergehäuse 13 entfernt. Danach werden die zwischen luftaustrittseitigem sowie lufteintrittseitigem Gehäuseteil 33, 32 angeordneten Schrauben 34 gelöst und der lufteintrittseitige Gehäuseteil 32 inklusive des Diffusors 17 abgenommen (Fig. 1). Anschliessend wird die Montageplatte 38 in den Gewindebohrungen 37 des luftaustrittseitigen Gehäuseteils 33 verschraubt, worauf die Arretierhülse 29 durch die zentrale Ausnehmung 41, bzw. die Büchse 42 der Montageplatte 38 in das Verdichterrad 14 eingeführt wird (Fig. 3, Fig. 4). Dabei gelangt der Aussensechskant 46 der Arretierhülse 29 mit dem Innensechskant 28 der Nabe 16 bzw. mit dem Innensechskant 43 der Büchse 42 in Eingriff, so dass das Verdichterrad 14 gegen Verdrehen arretiert wird. Anschliessend wird der Steckschlüssel 27 durch die Arretierhülse 29 hindurch in das Verdichterrad 14 eingeführt, bis er mit seinem Innensechskant 47 den Aussensechskant 26 des Wellenendes 19 umfasst (Fig. 3, oben). Natürlich kann der Steckschlüssel 27 auch gleichzeitig mit der Arretierhülse 29 in das Verdichterrad 14 eingeführt werden.

Danach wird die Wellen-Naben-Verbindung durch Drehen des Steckschlüssels 27 so weit gelöst, bis das Verdichterrad 14 an der Montage-/Demontagevorrichtung 39, respektive an der Büchse 42 der Montageplatte 38 ansteht (Fig. 3, Fig. 4, jeweils unten). Anschliessend erfolgt das Trennen der Montageplatte 38 vom luftaustrittseitigen Gehäuseteil 33, durch Lösen der zwischen den Befestigungsbohrungen 40 und den Gewindebohrung 37 angebrachten Schrauben 49. Dabei werden sowohl die Arretierhülse 29 als auch der Steckschlüssel 27 vom Verdichterrad 14 abgezogen. Nachdem das Verdichterrad 14 entfernt ist, sind auch weiter im Inneren des Abgasturboladers angeordnete Bauteile, wie z.B. die Lager 48 zugänglich. Je nach Bedarf können damit, neben dem Verdichterrad 14, auch diese inneren Bauteile von der Verdichterseite her demontiert werden. Bei der Montage des Verdichterrades 14 erfolgen die genannten Verfahrensschritte in umgekehrter Reihenfolge.

Da neben der ersten vor allem auch die zweite Aufnahmeeinrichtung im Inneren der Nabe 16 angeordnet ist und der Aussendurchmesser 45 des Steckschlüssels 27 auf einem Teil seiner Länge mit der Durchgangsbohrung 20 der Nabe 16 korrespondiert, kann das Verdichterrad nach dem Lösen von der Turboladerwelle und dem Trennen der Montageplatte 38 vom luftaustrittseitigen Gehäuseteil 33 auch gemeinsam mit der Montage/Demontagevorrichtung 39 aus dem Abgasturbolader entfernt werden. Damit entsteht ein starrer, d.h. relativ stabiler Verbund von Verdichterrad 14 und Montage-/Demontagevorrichtung 39, der sich sowohl vorteilhaft aus dem Abgasturbolader herausnehmen als auch wieder in diesen einführen lässt.

In einem zweiten Ausführungsbeispiel ist die Drehvorrichtung 27 auf ihrer der Nabe 16 abgewandten Seite mit einem Übersetzungsgetriebe 50 verbunden. Dazu weist der Steckschlüssel 27 an seiner dem Verdichterrad 14 abgewandten Seite einen Innenvierkant 51 auf, in welchen ein entsprechender Zapfen 52 des Übersetzungsgetriebes 50 eingreift. Das Übersetzungsgetriebe 50 besitzt einen in einer Aussparung 53 der Montageplatte 38 befestigten Arretierbügel 54. Zudem ist die Montageplatte 38 mit einer Hebe- und Transportvorrichtung 55 verbunden. Sie weist dazu in ihrem radial äusseren Bereich mehrere Befestigungsbohrungen 56 für die Aufnahme als Schrauben ausgebildeter, lösbarer Verbindungselemente 57 zur Hebe- und Transportvorrichtung 55 auf (Fig. 3).

Diese Montage-/Demontagevorrichtung 39 ist insbesondere für grössere Abgasturbolader, d.h. relativ schwere Verdichterräder 14 geeignet. Dabei erfolgt die Demontage im wesentlichen wie beim ersten Ausführungsbeispiel. Jedoch wird der Steckschlüssel 27 nach dem Einführen in das Verdichterrad 14 mit dem Übersetzungsgetriebe 50 verbunden. Letzteres wird mittels seines Arretierbügels 54 in der Aussparung 53 der Montageplatte 38 festgelegt und damit gegen Verdrehen gesichert. Je nach Auslegung kann mit einem solchen Übersetzungsgetriebe 50 das Drehmoment zum Lösen des Verdichterrades 14 und damit der erforderliche Kraftaufwand um das Fünf- bis Fünfundzwanzigfache verringert werden. Nach dem Lösen des Verdichterrades 14 wird das Übersetzungsgetriebe 50 wieder entfernt und das Verdichterrad 14, wie im ersten Ausführungsbeispiel, mit Hilfe des Steckschlüssels 27 von der Turboladerwelle 6 getrennt.

Wie ebenfalls bereits im ersten Ausführungsbeispiel beschrieben, wird nun die Montageplatte 38 vom luftaustrittseitigen Gehäuseteil 33 des Verdichtergehäuses 13 entfernt. Die Montageplatte 38 wird mit der Hebe- und Transportvorrichtung 55 verschraubt und mit deren Hilfe schliesslich das Verdichterrad 14 aus dem Abgasturbolader ausgefahren. Dabei dient die gesamte Montage-/Demontagevorrichtung wiederum als Transporteinheit zum Ausfahren des Verdichters. Auch bei diesem Ausführungsbeispiel erfolgt die Montage des Verdichterrades 14 in umgekehrter Reihenfolge der genannten Verfahrensschritte.

### Bezugszeichenliste

- 1: Verdichter
- 2: Abgasturbine
- 3: Turbinengehäuse, Gehäuse
- 4: Gaseintrittgehäuse
- 5: Gasaustrittgehäuse
- 6: Turboladerwelle
- 7: Turbinenrad
- 8: Laufschaufel
- 9: Düsenring
- 10: Strömungskanal
- 11: Turbinendiffusor
- 12: Schraube
- 13: Verdichtergehäuse, Gehäuse
- 14: Verdichterrad
- 15: Laufschaufel
- 16: Nabe
- 17: Diffusor
- 18: Spirale
- 19: Wellenende
- 20: Durchgangsbohrung
- 21: Befestigungsgewinde, von 19
- 22: Befestigungsmuffe
- 23: Innengewinde, von 22
- 24: Führungsfläche der Befestigungsmuffe
- 25: Führungsfläche des Wellenendes
- 26: Aufnahmeeinrichtung, erste (Aussensechskant)
- 27: Drehvorrichtung, Steckschlüssel
- 28: Aufnahmeeinrichtung, zweite (Innensechskant)
- 29: Arretiervorrichtung, Arretierhülse
- 30: Lagergehäuse
- 31: Zwischenwand
- 32: Gehäuseteil, lufteintrittseitig
- 33: Gehäuseteil, luftaustrittseitig
- 34: Befestigungselement, Schraube
- 35: Ausnehmung, Bohrung
- 36: Filter-Schalldämpfer
- 37: Aufnahmeeinrichtung, dritte (Gewindebohrung)
- 38: Montageplatte
- 39: Montage-/Demontagevorrichtung
- 40: Befestigungsbohrung, von 38
- 41: zentrale Ausnehmung, von 38
- 42: Büchse, in 38
- 43: Innensechskant, von 42
- 44: Innendurchmesser, von 29
- 45: Aussendurchmesser, von 27
- 46: Aussensechskant, von 29
- 47: Innensechskant, von 27
- 48: Lager
- 49: Schraube
- 50: Übersetzungsgetriebe der Drehvorrichtung
- 51: Innenvierkant von 27
- 52: Zapfen von 50
- 53: Aussparung von 38
- 54: Arretierbügel
- 55: Hebe- und Transportvorrichtung (der Montageplatte)
- 56: Befestigungsbohrung
- 57: Verbindungselement, Schraube

## Patentansprüche

1. Verdichterradanordnung für Turbolader, bestehend aus
einem mit einem Turbinengehäuse (3) verbundenen Verdichtergehäuse (13), welches seinerseits aus zumindest einem lufteintritt- sowie zumindest einem luftaustrittseitigen Gehäuseteil (32, 33) besteht, wobei zwischen beiden Gehäuseteilen (32, 33) mehrere Befestigungselemente (34) lösbar angeordnet sind, und
einem über eine Turboladerwelle (6) mit einem Turbinenrad (7) verbundenen Verdichterrad (14), welches seinerseits aus einer Nabe (16) mit einer Vielzahl von Laufschaufeln (15) besteht,
wobei
die Nabe (16) eine zentrale, das verdichterradseitige Wellenende (19) der Turboladerwelle (6) aufnehmende Durchgangsbohrung (20) aufweist, auf dem verdichterradseitigen Wellenende (19) ein Befestigungsgewinde (21) für die Nabe (16) angeordnet ist,
weiterhin an einem Wellenende eine erste und am Verdichterrad eine zweite Aufnahmeeinrichtung (28) für eine Montage-/Demontagevorrichtung (39) des Verdichterrades angeordnet ist, und am luftaustrittseitigen Gehäuseteil (33) eine dritte Aufnahmeeinrichtung (37) angeordnet ist,
dadurch gekennzeichnet, dass
a) die Nabe (16) eine an sich bekannte, turbinenseitige Befestigungsmuffe (22) mit integriertem Innengewinde (23) aufweist, welches mit dem Befestigungsgewinde (21) des verdichterradseitigen Wellenendes (19) korrespondiert,
b) jeweils beidseitig des Innengewindes (23) und des Befestigungsgewindes (21) eine an sich bekannte Führungsfläche (24, 25) angeordnet ist und die Führungsflächen (24) der Befestigungsmuffe (22) mit den Führungsflächen (25) des verdichterradseitigen Wellenendes (19) korrespondieren,
c) die erste Aufnahmeeinrichtung (26) am verdichterradseitigen Wellenende (19) angeordnet ist, und
d) die dritte Aufnahmeeinrichtung (37) für die Montage-/Demontagevorrichtung (39) des Verdichterrades vorgesehen ist.

2. Verdichterradanordnung nach Anspruch 1, dadurch gekennzeichnet, dass das Wellenende (19) zwischen dem Bereich der Befestigungsmuffe (22) und dem der Befestigungsmuffe (22) entgegengesetzten Bereich der Nabe (16) angeordnet ist.

3. Verdichterradanordnung nach Anspruch 1, dadurch gekennzeichnet, dass das Wellenende (19) im Bereich der Befestigungsmuffe (22) angeordnet ist.

4. Verdichterradanordnung nach Anspruch 1, dadurch gekennzeichnet, dass das Wellenende (19) am der Befestigungsmuffe (22) entgegengesetzten Bereich der Nabe (16) angeordnet ist.

5. Verdichterradanordnung nach einem der Ansprüche 2 bis 4, dadurch gekennzeichnet, dass die erste Aufnahmeeinrichtung (26) als ein am Wellenende (19) angeordneter Aussensechskant, die zweite Aufnahmeeinrichtung (28) als ein am der Befestigungsmuffe (22) entgegengesetzten Ende der Nabe (16) angeordneter Sechskant und die dritte Aufnahmeeinrichtung (37) als Gewindebohrungen im luftaustrittseitigen Gehäuseteil (33) ausgebildet ist.

6. Verdichterradanordnung nach Anspruch 5, dadurch gekennzeichnet, dass die zweite Aufnahmeeinrichtung (28) als Innensechskant der Nabe (16) ausgebildet ist.

7. Verdichterradanordnung nach einem der Anspruch 5 oder 6, dadurch gekennzeichnet, dass die Befestigungselemente (34) des luftaustrittseitigen Gehäuseteils (33) als dritte Aufnahmeeinrichtung (37) ausgebildet sind.

8. Verdichterradmontage-/Demontagevorrichtung für eine Verdichterradanordnung nach einem der Ansprüche 1 bis 7, dadurch gekennzeichnet, dass
a) die Verdichterradmontage-/Demontagevorrichtung (39) aus einer Montageplatte (38), einer Arretiervorrichtung (29) und einer Drehvorrichtung (27) besteht,
b) die Montageplatte (38) in ihrem radial äusseren Bereich mehrere Befestigungsbohrungen (40) für den luftaustrittseitigen Gehäuseteil (33) des Verdichters (1) sowie eine zentrale Ausnehmung (41) zur Aufnahme von Arretier-(29) und Drehvorrichtung (27) aufweist,
c) in der zentralen Ausnehmung (41) eine Büchse (42) zur Aufnahme der Arretiervorrichtung (29) in der Montageplatte (38) befestigt ist.

9. Verdichterradmontage-/Demontagevorrichtung nach Anspruch 8, dadurch gekennzeichnet, dass die Arretiervorrichtung (29) als Arretierhülse mit einem Aussensechskant (46) sowie einem Innendurchmesser (44), die Drehvorrichtung (27) als Steckschlüssel mit einem Aussendurchmesser (45) ausgebildet sind und letzterer kleiner als der Innendurchmesser (44) der Arretierhülse (29) ist.

10. Verdichterradmontage-/Demontagevorrichtung nach Anspruch 9, dadurch gekennzeichnet, dass der Aussendurchmesser (45) des Steckschlüssels (27) auf einem Teil seiner Länge mit der Durchgangsbohrung (20) der Nabe (16) korrespondiert.

11. Verdichterradmontage-/Demontagevorrichtung nach Anspruch 10, dadurch gekennzeichnet, dass der Steckschlüssel (27) auf seinem der Nabe (16) abgewandten Seite mit einem Übersetzungsgetriebe (50) verbunden ist.

12. Verdichterradmontage-/Demontagevorrichtung nach einem der Ansprüche 8 bis 11, dadurch gekennzeichnet, dass die Montageplatte (38) mit einer Hebe- und Transportvorrichtung (55) verbunden ist.

13. Montage-/Demontageverfahren für eine Verdichterradanordnung nach einem der Ansprüche 1 bis 7, sowie für eine Verdichterradmontage-/Demontagevorrichtung nach einem der Ansprüche 8 bis 12, dadurch gekennzeichnet, dass
a) bei der Demontage zunächst die Befestigungselemente (34) von dem luftaustrittseitigen sowie vom lufteintrittseitigen Gehäuseteil (33, 32) gelöst und letzterer entfernt wird,
b) danach die Montageplatte (38) am luftaustrittseitigen Gehäuseteil (33) befestigt wird,
c) anschliessend das Verdichterrad (14) mittels der Arretiervorrichtung (29) arretiert wird,
d) danach die Wellen-Naben-Verbindung mittels der Drehvorrichtung (27) gelöst wird,
e) anschliessend die Montageplatte (38) vom luftaustrittseitigen Gehäuseteil (33) getrennt, dabei sowohl die Arretiervorrichtung (29) als auch die Drehvorrichtung (27) vom Verdichterrad (14) abgezogen und letzteres schliesslich entfernt wird, und
f) bei der Montage die Verfahrensschritte in umgekehrter Reihenfolge erfolgen.

14. Montage-/Demontageverfahren nach Anspruch 13, dadurch gekennzeichnet, dass zum Lösen der Wellen-Naben-Verbindung die Turboladerwelle (6) gedreht und das Verdichterrad (14) arretiert wird.

15. Montage-/Demontageverfahren nach Anspruch 13, dadurch gekennzeichnet, dass zum Lösen der Wellen-Naben-Verbindung das Verdichterrad (14) gedreht und die Turboladerwelle (6) arretiert wird.

16. Montage-/Demontageverfahren nach Anspruch 14 oder 15, dadurch gekennzeichnet, dass bei der Demontage schwerer Verdichterräder (14) die Montageplatte (38) nach dem Trennen vom luftaustrittseitigen Gehäuseteil (33) mit der Hebe- und Transportvorrichtung (55) verbunden wird, sowohl die Arretiervorrichtung (29) als auch die Drehvorrichtung (27) am Verdichterrad (14) verbleiben, das Verdichterrad (14) einschliesslich der gesamten Verdichterradmontage-/Demontagevorrichtung (39) mittels der Hebe- und Transportvorrichtung (55) entfernt und erst anschliessend von beiden Vorrichtungen (27, 29) getrennt wird.

## Claims

1. A compressor impeller arrangement for turbochargers, consisting of a compressor casing (13), which is connected to a turbine casing (3) and which consists in turn of at least one air inlet end casing part and at least one air outlet end casing part (32, 33), a plurality of fastening elements (34) being releasably arranged between the two casing parts (32, 33), and consisting of a compressor impeller (14) connected to a turbine rotor (7) by means of a turbocharger shaft (6), which compressor impeller (14) consists in turn of a hub (16) with a multiplicity of impeller vanes (15), the hub (16) having a central through hole (20), which accepts a shaft end (19) (at the compressor impeller end) of the turbocharger shaft (6), a fastening thread (21) for the hub (16) being arranged on the shaft end (19) (at the compressor impeller end), a first acceptance device (28) being arranged, furthermore, at one shaft end and a second acceptance device (28) being arranged on the compressor impeller for an assembly/dismantling appliance (39) of the compressor impeller, and a third acceptance device (37) being arranged at the air outlet end casing part (33), characterized in that
a) the hub (16) has a turbine end fastening sleeve (22), known per se, with integrated internal thread (23), which corresponds to the fastening thread (21) of the shaft end (19) (at the compressor impeller end),
b) a guide surface (24, 25) known per se is arranged on both sides of both the internal thread (23) and the fastening thread (21) and the guide surfaces (24) of the fastening sleeve (22) correspond to the guide surfaces (25) of the shaft end (19) (at the compressor impeller end),
c) the first acceptance device (26) is arranged at the shaft end (19) (at the compressor impeller end), and
d) the third acceptance device (37) is provided for the assembly/dismantling appliance (39) of the compressor impeller.

2. The compressor impeller arrangement as claimed in claim 1, characterized in that the shaft end (19) is arranged between the region of the fastening sleeve (22) and the region of the hub (16) opposite to the fastening sleeve (22).

3. The compressor impeller arrangement as claimed in claim 1, characterized in that the shaft end (19) is arranged in the region of the fastening sleeve (22).

4. The compressor impeller arrangement as claimed in claim 1, characterized in that the shaft end (19) is arranged at the region of the hub (16) opposite to the fastening sleeve (22).

5. The compressor impeller arrangement as claimed in one of claims 2 to 4, characterized in that the first acceptance device (26) is configured as an external hexagon arranged at the shaft end (19), the second acceptance device (28) is configured as a hexagon arranged at the end of the hub (16) opposite to the fastening sleeve (22) and the third acceptance device (37) is configured as threaded holes in the air outlet end casing part (33).

6. The compressor impeller arrangement as claimed in claim 5, characterized in that the second acceptance device (28) is configured as an internal hexagon of the hub (16).

7. The compressor impeller arrangement as claimed in one of claims 5 or 6, characterized in that the fastening elements (34) of the air outlet end casing part (33) are configured as a third acceptance device (37).

8. A compressor impeller assembly/dismantling appliance for a compressor impeller arrangement as claimed in one of claims 1 to 7, characterized in that
a) the compressor impeller assembly/dismantling appliance (39) consists of an assembly plate (38), a locking appliance (29) and a turning appliance (27),
b) the assembly plate (38) has, in its radially outer region, a plurality of fastening holes (40) for the air outlet end casing part (33) of the compressor (1) and a central opening (41) for accepting the locking appliance (29) and the turning appliance (27),
c) a bush (42) for accepting the locking appliance (29) in the assembly plate (38) is fastened in the central opening (41).

9. The compressor impeller assembly/dismantling appliance as claimed in claim 8, characterized in that the locking appliance (29) is configured as a locking sleeve with an external hexagon (46) and an internal diameter (44), the turning appliance (27) is configured as a socket wrench with an external diameter (45) and the latter is smaller than the internal diameter (44) of the locking sleeve (29).

10. The compressor impeller assembly/dismantling appliance as claimed in claim 9, characterized in that the external diameter (45) of the socket wrench (27) corresponds, along a part of its length, to the through hole (20) of the hub (16).

11. The compressor impeller assembly/dismantling appliance as claimed in claim 10, characterized in that the socket wrench (27) is connected, at its end facing away from the hub (16), to a step-up gear (50).

12. The compressor impeller assembly/dismantling appliance as claimed in one of claims 8 to 11, characterized in that the assembly plate (38) is connected to a lifting and transport appliance (55).

13. An assembly/dismantling method for a compressor impeller arrangement as claimed in one of claims 1 to 7, and for a compressor impeller assembly/dismantling appliance as claimed in one of claims 8 to 12, characterized in that
a) during the dismantling, the fastening elements (34) are first released from the air outlet end casing part and from the air inlet end casing part (33, 32) and the latter is removed,
b) after this, the assembly plate (38) is fastened to the air outlet end casing part (33),
c) the compressor impeller (14) is then locked by means of the locking appliance (29),
d) after this, the shaft/hub connection is released by means of the turning appliance (27),
e) the assembly plate (38) is then separated from the air outlet end casing part (33), in the process both the locking appliance (29) and the turning appliance (27) are withdrawn from the compressor impeller (14) and the latter is finally removed, and
f) during the assembly, the steps in the method take place in the reverse order.

14. The assembly/dismantling method as claimed in claim 13, characterized in that in order to release the shaft/hub connection, the turbocharger shaft (6) is rotated and the compressor impeller (14) is locked.

15. The assembly/dismantling method as claimed in claim 13, characterized in that in order to release the shaft/hub connection, the compressor impeller (14) is rotated and the turbocharger shaft (6) is locked.

16. The assembly/dismantling method as claimed in claim 14 or 15, characterized in that during the dismantling of heavy compressor impellers (14), the assembly plate (38) is connecting to a lifting and transport appliance (55) after the separation from the air outlet end casing part (33), both the locking appliance (29) and the turning appliance (27) remain on the compressor impeller (14), the compressor impeller (14) including the complete compressor impeller assembly/dismantling appliance (39) is removed by means of the lifting and transport appliance (55) and is only subsequently separated from the two appliances (27, 29).

## Revendications

1. Arrangement de roue de compresseur pour des turbocompresseurs à suralimentation, se composant de
un corps de compresseur (13) assemblé à un corps de turbine (3), et qui se compose à son tour d'au moins une partie de corps du côté de l'entrée d'air ainsi que d'au moins une partie de corps du côté de la sortie d'air (32, 33), plusieurs éléments de fixation (34) étant disposés de manière démontable entre les deux parties de corps (32, 33), et
une roue de compresseur (14) reliée à une roue de turbine (7) par un arbre de turbocompresseur à suralimentation (6), laquelle se compose à son tour d'un moyeu (16) avec une pluralité d'aubes mobiles (15),
dans lequel
le moyeu (16) présente un alésage central traversant (20) qui héberge l'extrémité d'arbre (19) de l'arbre de turbocompresseur à suralimentation (6) située du côté de la roue de compresseur,
un filet de fixation (21) pour le moyeu (16) est disposé sur l'extrémité d'arbre (19) située du côté de la roue de compresseur,
en outre un premier moyen d'application pour un dispositif de montage/démontage (39) de la roue de compresseur est disposé sur l'extrémité d'arbre (19) et un deuxième moyen d'application (28) est disposé sur la roue de compresseur, et un troisième moyen d'application (37) est disposé sur la partie de corps du côté de la sortie d'air (33),
caractérisé en ce que
a) le moyeu (16) présente un manchon de fixation (22) connu en soi situé du côté de la turbine, avec un filet intérieur intégré (23), qui correspond au filet de fixation (21) de l'extrémité d'arbre (19) du côté de la roue de compresseur,
b) de part et d'autre du filet intérieur (23) et du filet de fixation (21) est disposée une face de guidage (24, 25) connue en soi, et les faces de guidage (24) du manchon de fixation (22) correspondent aux faces de guidage (25) de l'extrémité d'arbre (19) du côté de la roue de compresseur,
c) le premier moyen d'application (26) est disposé sur l'extrémité d'arbre (19) du côté de la roue de compresseur, et
d) le troisième moyen d'application (37) est prévu pour le dispositif de montage/démontage (39) de la roue de compresseur.

2. Arrangement de roue de compresseur suivant la revendication 1, caractérisé en ce que l'extrémité d'arbre (19) est disposée entre la région du manchon de fixation (22) et la région du moyeu (16) située à l'opposé du manchon de fixation (22).

3. Arrangement de roue de compresseur suivant la revendication 1, caractérisé en ce que l'extrémité d'arbre (19) est disposée dans la région du manchon de fixation (22).

4. Arrangement de roue de compresseur suivant la revendication 1, caractérisé en ce que l'extrémité d'arbre (19) est disposée dans la région du moyeu (16) située à l'opposé du manchon de fixation (22).

5. Arrangement de roue de compresseur suivant l'une quelconque des revendications 2 à 4, caractérisé en ce que le premier moyen d'application (26) a la forme d'une portée à six pans extérieurs disposée sur l'extrémité d'arbre (19), le deuxième moyen d'application (28) celle d'une portée à six pans disposée à l'extrémité du moyeu (16) située à l'opposé du manchon de fixation (22) et le troisième moyen d'application (37) celle d'alésages filetés dans la partie de corps du côté de la sortie d'air (33).

6. Arrangement de roue de compresseur suivant la revendication 5, caractérisé en ce que le deuxième moyen de ; placement (28) a la forme d'une portée à six pans intérieurs du moyeu (16).

7. Arrangement de roue de compresseur suivant l'une quelconque des revendications 5 ou 6, caractérisé en ce que les éléments de fixation (34) de la partie de corps du côté de la sortie d'air (33) constituent le troisième moyen d'application (37).

8. Dispositif de montage/démontage de roue de compresseur pour un arrangement de roue de compresseur suivant l'une quelconque des revendications 1 à 7, caractérisé en ce que
a) le dispositif de montage/démontage (39) de roue de compresseur se compose d'un plateau de montage (38), d'un dispositif de blocage (29) et d'un dispositif de rotation (27),
b) le plateau de montage (38) présente dans sa région radialement extérieure plusieurs alésages de fixation (40) pour la partie de corps du compresseur (1) du côté de la sortie d'air (33) ainsi qu'une cavité centrale (41) destinée à recevoir le dispositif de blocage (29) et le dispositif de rotation (27),
c) une tubulure (42) est fixée dans la cavité centrale (41) pour recevoir le dispositif de blocage (29) dans le plateau de montage (38).

9. Dispositif de montage/démontage de roue de compresseur suivant la revendication 8,
caractérisé en ce que le dispositif de blocage (29) a la forme d'une douille de blocage avec une portée à six pans extérieurs (46) ainsi qu'un diamètre intérieur (44), le dispositif de rotation (27) celle d'une clé à douille avec un diamètre extérieur (45), et en ce que ce dernier est plus petit que le diamètre intérieur (44) de la douille de blocage (29).

10. Dispositif de montage/démontage de roue de compresseur suivant la revendication 9, caractérisé en ce que le diamètre extérieur (45) de la clé à douille (27) correspond sur une partie de sa longueur à l'alésage traversant (20) du moyeu (16).

11. Dispositif de montage/démontage de roue de compresseur suivant la revendication 10, caractérisé en ce que la clé à douille (27) est reliée à un dispositif démultiplicateur (50) par son côté situé à l'opposé du moyeu (16).

12. Dispositif de montage/démontage de roue de compresseur suivant l'une quelconque des revendications 8 à 11, caractérisé en ce que le plateau de montage (38) est assemblé à un dispositif de levage et de transport (55).

13. Procédé de montage/démontage pour un arrangement de roue de compresseur suivant l'une quelconque des revendications 1 à 7, ainsi que pour un dispositif de montage/démontage d'un arrangement de roue de compresseur suivant l'une quelconque des revendications 8 à 12, caractérisé en ce que
a) au démontage, on retire d'abord les éléments de fixation (34) de la partie de corps du côté de la sortie d'air ainsi que du côté de l'entrée d'air (33, 32) et on enlève cette dernière,
b) on fixe ensuite le plateau de montage (38) à la partie de corps du côté de la sortie d'air (33),
c) puis on bloque la roue de compresseur (14) au moyen du dispositif de blocage (29),
d) ensuite on démonte l'assemblage arbre-moyeu au moyen du dispositif de rotation (27),
e) puis on sépare le plateau de montage (38) de la partie de corps du côté de la sortie d'air (33), aussi bien le dispositif de blocage (29) que le dispositif de rotation (27) étant à cette occasion retirés de la roue de compresseur (14) et cette dernière étant finalement enlevée, et
f) au montage, on exécute les étapes du procédé dans l'ordre inverse.

14. Procédé de montage/démontage suivant la revendication 13, caractérisé en ce que, pour démonter l'assemblage arbre-moyeu, on fait tourner l'arbre de turbocompresseur à suralimentation (6) et on bloque la roue de compresseur (14).

15. Procédé de montage/démontage suivant la revendication 13, caractérisé en ce que, pour démonter l'assemblage arbre-moyeu, on fait tourner la roue de compresseur (14) et on bloque l'arbre de turbocompresseur à suralimentation (6).

16. Procédé de montage/démontage suivant la revendication 14 ou 15, caractérisé en ce qu'au démontage de roues de compresseur (14) plus lourdes, le plateau de montage (38) est assemblé au dispositif de levage et de transport (55) après avoir été séparé de la partie de corps du côté de la sortie d'air (33), tant le dispositif de blocage (29) que le dispositif de rotation (27) restent sur la roue de compresseur (14), la roue de compresseur (14) y compris tout le dispositif de montage/démontage de roue de compresseur (39) est enlevée au moyen du dispositif de levage et de transport (55) et est seulement ensuite séparée des deux dispositifs (27, 29).
